(19) **Europäisches Patentamt / European Patent Office / Office européen des brevets**

(11) **EP 2 359 556 B1**

(12) # EUROPEAN PATENT SPECIFICATION

(45) Date of publication and mention
of the grant of the patent:
**19.09.2012 Bulletin 2012/38**

(51) Int Cl.:
**H04L 27/14** $^{(2006.01)}$    **H04L 27/152** $^{(2006.01)}$
**H04L 27/156** $^{(2006.01)}$

(21) Application number: **09760997.8**

(22) Date of filing: **12.11.2009**

(86) International application number:
**PCT/IB2009/055018**

(87) International publication number:
**WO 2010/058324 (27.05.2010 Gazette 2010/21)**

(54) **DEVICES AND METHODS IMPLEMENTING FREQUENCY OFFSET DETERMINATION FOR FSK RECEIVERS**

EINRICHTUNGEN UND VERFAHREN ZUR IMPLEMENTIERUNG DER FREQUENZOFFSETBESTIMMUNG FÜR FSK-EMPFÄNGER

DISPOSITIFS ET PROCÉDÉS DE MISE EN OEUVRE D'UNE DÉTERMINATION DE DÉCALAGE DE FRÉQUENCE POUR RÉCEPTEURS FSK

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.11.2008 US 116773 P**

(43) Date of publication of application:
**24.08.2011 Bulletin 2011/34**

(73) Proprietor: **NXP B.V.**
**5656 AG Eindhoven (NL)**

(72) Inventor: **NOEL, Denis**
**San Jose, California 95131 (US)**

(74) Representative: **Schouten, Marcus Maria et al**
**NXP B.V.**
**IP & Licensing Department**
**High Tech Campus 60**
**5656 AG Eindhoven (NL)**

(56) References cited:
**EP-A1- 1 631 030    US-A- 5 469 112**
**US-A- 5 633 895    US-A1- 2007 011 219**
**US-B1- 6 553 083**

## Description

This patent document relates to systems and methods of frequency offset measurement for adjustment of an FSK receiver to the carrier frequency of an FSK transmitter.

Communication systems based on magnetic induction technology involve short range wireless communication by coupling a tight magnetic field between a transmitter device and a receiver device. A transmitter coil in the transmitter device modulates a magnetic field, which is detected and measured by a receiver coil in the receiver device. Magnetic induction communication technology is based on the quasi-static magnetic component of the field generated by a coil through which is flowing a sinusoidal current. Through the well-known transformer principle, when a second coil (at the receiver side) is introduced within the field generated by the transmitter, the magnetic flux passing through the receiver coil induces a modulated current in the winding, resulting in the ability to transfer information. Near field magnetic induction communication systems are designed to contain magnetic field localized around the communication system, with little radiations into free space. Wireless communication via near field magnetic induction technology can occur when the devices are separated by less than a small distance (typically about 1.5 meters), making such communications secure from long range eavesdropping.

US5633895 describes a communication device with a synchronized zero-crossing demodulator. A synchronizer system and method derive symbol transition timing information from a zero-crossing detector output. The synchronizer is, in one embodiment, connected to the output of a zero-crossing detector to provide an edge clock signal to a phase angle estimator, which is passed to a decision device, which provides a symbol estimate which is later decoded into an information message. In an alternative embodiment, a synchronizer is combined with the phase angle estimator to provide as an output, a phase angle estimate which is passed to a decision device which provides a symbol estimate signal, which is later decoded to obtain the information message. The alternative embodiment allows recovery of the second symbol which is typically lost in implementing the first embodiment of the system, to avoid second order error effects on recovered data.

US5469112 describes a communication device that includes mixers and which mix a local oscillator with a received signal to produce in-phase (i) and quadrature (q) components. The direction of the phase of the signal is detected as it crosses the i and q axes. The direction of the phase rotation is kept track of by a bi-directional counter in order to demodulate multilevel digital signals. A positive rotation increments the bi-directional counter. Conversely, a negative direction decrements the counter. The final count of the counter is used by a decision device to establish the content of the received information signal.

EP1631030 describes a system and method for automatic frequency correction in a receiver, where the number of clock cycles in a baseband data signal, such as an I or Q channel of the receiver or an XOR of the I and Q channels, for a "1" state and a "0" state of a received data signal are each determined and the difference between the two is used to calculate a subsequent frequency offset correction value. The subsequent frequency offset correction value is added to a current offset correction value to obtain an actual offset correction value. The actual offset correction value is then used to adjust the frequency of the receiver clock.

US6553083 describes a frequency control and orthogonal detection circuit and a FSK receiver capable of reducing a circuit size and control of VCO appropriately. The orthogonal detection circuit and the FSK receiver of the present invention include a delay circuit, a decoder for decoding the direction of rotation, and a first integral electric discharging circuit to detect the direction of rotation of the signal point of a signal received. There is also a second delay circuit, an XOR circuit, an adder, and a second integral electric discharging circuit to detect a rotation of the signal point of a signal received. The decision circuit decides a symbol on the basis of them. The AFC circuit controls the frequency of a signal outputted by the VCO in comparison with an ideal signal outputted by the standardizing circuit.

US2007011219 describes a method for estimating a frequency offset of a modulated bandpass signal (s) with an assumed carrier frequency in a mobile radio receiver, times of the zero cross-overs of the bandpass signal are determined in a first step. Using the times of the zero cross-overs and the assumed carrier frequency, the required frequency offset is estimated in a further step by calculating the DC component of an instantaneous frequency which is given by the frequency of the bandpass signal less the assumed carrier frequency.

Standard modulation schemes used in typical RF communications can be used in near-field magnetic induction systems, including frequency-shift keying (FSK). In FSK modulation, information is transmitted through discrete frequency changes of a sinusoidal carrier wave. This involves modulating digital data onto the carrier wave to thereby encode the information present in the data into variations of the carrier's instantaneous frequency between one of two frequencies. In magnetic induction and other communication systems using FSK modulation, the local oscillator frequency of the receiver is aligned to the carrier frequency of the transmitter in order to properly demodulate the transmitted signal.

The present invention is directed to overcoming the above-mentioned challenges and others related to the types of applications discussed above and in other applications. These and other aspects of the present invention are exemplified in a number of illustrated implementations and applications, some of which are shown in the figures and characterized in the claims section that follows.

According to an example embodiment of the present invention, a method is provided for matching a local oscillator frequency of an RF receiver to the carrier frequency of received FSK-modulated bit streams on a carrier frequency. The method includes detecting zero-crossings for at least one combination of I and Q signal pairs of the FSK-modulated bit stream, and determining positive occurrences of each zero-crossing of the at least one combination of I and Q signal pairs in a first direction, and negative occurrences for each zero-crossing of the at least one combination of I and Q signal pairs in a second direction opposite the first direction. Over a plurality of positive and negative occurrences, the total time elapsed between consecutive positive occurrences and the total time elapsed between consecutive negative occurrences are measured and accumulated along with the total positive occurrences and the total negative occurrences. A positive occurrence ratio of the accumulated total time elapsed between consecutive positive occurrences to the total positive occurrences is compared to a negative occurrence ratio of the accumulated total time elapsed between consecutive negative occurrences to the total negative occurrences, and in response to the comparison, the local oscillator frequency of the RF receiver is adjusted.

According to another example embodiment of the present invention, an RF receiver is provided for use in receiving an RF signal including FSK-modulated bit streams on a carrier frequency. The RF receiver includes an LC antenna circuit having a local oscillator tuned at a central frequency for receiving the RF signal, and a demodulator arranged to demodulate the FSK-modulated bit streams of the received RF signal. The demodulator includes a zero-crossing detector having logic circuitry arranged to convert I and Q signal representations of the received RF signal into positive pulses representing zero-crossing in a first direction of at least one combination of I and Q signal pairs, and negative pulses representing zero-crossing in a second direction opposite the first direction of the at least one combination of I and Q signal pairs. The demodulator further includes a frequency control module having circuitry to adjust the central frequency of the local oscillator based on comparing a positive pulse ratio of time elapsed between consecutive positive pulses to the number of positive pulses and a negative pulse ratio of time elapsed between consecutive negative pulses to the number of negative pulses.

According to another example embodiment of the present invention, a method is provided for matching a local oscillator frequency of an RF receiver to the carrier frequency of received FSK-modulated bit streams on a carrier frequency. The method includes detecting zero-crossings for at least one combination of I and Q signal pairs of an FSK-modulated bit stream, and determining high occurrences of each zero-crossing of the at least one combination of I and Q signal pairs according to a first crossing vector, and low occurrences for each zero-crossing of the at least one combination of I and Q signal pairs according to a second crossing vector different from the first crossing vector. Over a plurality of high and low occurrences, the total time elapsed between consecutive high occurrences is accumulated, along with the total time elapsed between consecutive low occurrences, the total high occurrences, and the total low occurrences. A high occurrence ratio is developed based on the accumulated total time elapsed between consecutive high occurrences and the total high occurrences, and a low occurrence ratio is developed based on the accumulated total time elapsed between consecutive low occurrences and the total low occurrences. The local oscillator frequency of the RF receiver is adjusted based on the developed high occurrence ratio and low occurrence ratio.

The above summary is not intended to describe each illustrated embodiment or every implementation of the present invention.

The invention may be more completely understood in consideration of the following detailed description of various embodiments of the invention in connection with the accompanying drawings, in which:

FIG. 1 is a schematic representation of an example magnetic induction communications system that includes frequency offset determination and adjustment in accordance with certain embodiments of the present invention; and

FIG. 2 is a schematic representation of circuitry for use in a receiver for frequency offset determination and adjustment in accordance with certain embodiments of the present invention.

While the invention is amenable to various modifications and alternative forms, specifics thereof have been shown by way of example in the drawings and will be described in detail. The intention is to cover all modifications falling within the scope of the claims.

The present invention is applicable to a variety of applications, such as near field magnetic induction communication applications, that utilize FSK modulation for sending signals on a carrier frequency, and particularly where the local frequency of the receiver may be adjusted to lock on to the carrier frequency. Examples include systems that use zero-IF FSK receivers, and particularly those systems in which constraints such as component size; cost, and power consumption advise against the inclusion of a crystal capable of providing a highly accurate frequency reference. As a particular example, certain embodiments of the present invention may be suitable for implementation in an ultra low power, magnetic induction based, FSK audio/data link system. Applications of such devices include hearing aids, headsets, microphones, implanted medical devices, and so forth, including those that communicate via Bluetooth or any other suitable near-communications protocol. While the present invention is not necessarily limited to such applications, an appreciation of various aspects of the invention is gained through a discussion of examples in such an environment. Moreover, while aspects of the present invention may be conveniently illustrated in the context of a zero-IF receiver, it will be appreciated that embodiments of the present invention are also applicable to low-IF receivers, as indicated in the descriptions that follow.

According to an example embodiment of the present invention, an RF receiver receives FSK-modulated bit streams on a carrier frequency. The local oscillator frequency of the RF receiver is matched to the carrier frequency by comparing the accumulated spread between the higher tone of the FSK signal and the frequency of the local oscillator to the accumulated spread of the lower tone of the FSK signal and the frequency of the local oscillator, and adjusting accordingly. In certain embodiments, this involves detecting zero-crossings for I and Q signal pairs of the received FSK-modulated bit stream, and determining high occurrences of each zero-crossing of the I and Q signal pairs according to a crossing vector (direction or rate), and low occurrences for each zero-crossing of the I and Q signal pairs according to a different crossing vector (opposite direction or different rate). For example, positive occurrences of each zero-crossing of the I and Q signal pairs are determined based on crossings in a first direction, and negative occurrences for each zero-crossing of the I and Q signal pairs are determined based on crossings in a second, apposite direction. Over a plurality of positive and negative occurrences, the total time elapsed between consecutive positive occurrences is measured and accumulated along with the total time elapsed between consecutive negative occurrences. The total time elapsed between consecutive positive occurrences is divided by the total positive occurrences to develop a positive occurrence ratio. Similarly, a negative occurrence ratio is developed. The positive and negative occurrence ratios are then compared, and the result of the comparison is used to adjust the local oscillator frequency of the RF receiver.

Because aspects of the present invention involve comparing ratios developed between the accumulated positive occurrence times and the number of positive occurrences, and between the accumulated negative occurrence times and the number of negative occurrences, implementations of embodiments of the present invention need not rely upon having a balanced bit stream. As such, certain embodiments of systems and methods of the present invention may be utilized with bit streams having an unequal number of 1's and 0's, allowing implementation of systems that are independent of data features of the transmitted bit stream.

In accordance with certain embodiments, the described methods of measuring the frequency offset between the carrier frequency of FSK-modulated bit streams received by a receiver and the local oscillator frequency of the receiver, and of adjusting the frequency of the local osciallator accordingly are implemented in the demodulator circuit of a receiver device. Such receiver devices include a processing unit having a zero-crossing detector and an automatic frequency control loop (AFC) circuit for measuring the frequency offset and adjusting the receiver to lock on to the carrier frequency.

Receivers in accordance with certain embodiments of the present invention include low power on-chip oscillator as frequency reference, for example an RC type oscillator. While the accuracy of crystal oscillators can reach values of $\pm 20$ ppm or better, the accuracy of on-chip oscillators is more typically limited to a $\pm 1\%$ or more. As such, frequency offset measurement and control in accordance with the present invention may be used to adjust the on-chip local oscillator of the receiver to match the carrier frequency even without the use of a highly accurate frequency reference.

Various aspects of the present invention can be implemented using a variety of hardware and software solutions. As generally discussed herein, functions of the AFC can be realized through software stored on a storage medium. When the software is executed by a processing circuit, such as a micro-processor, one or more aspects of the invention arc carried out or facilitated. Alternatively, functions of the AFC could be implemented as a logic circuit. For instance, functional software code can be transferred to a programmable logic array. In another instance, an integrated logic circuit could be designed to carry out one or more aspects of the present invention.

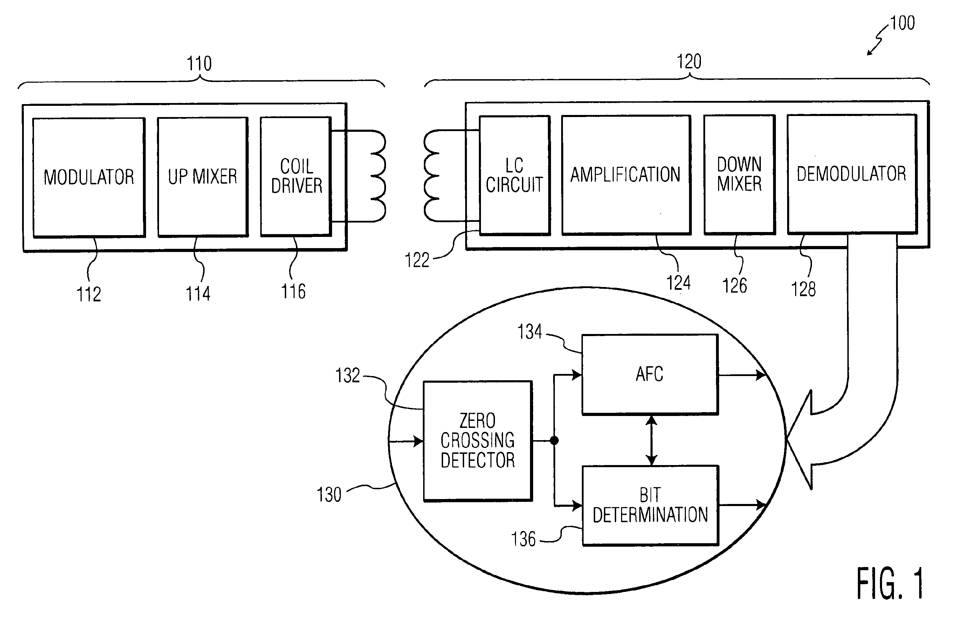

As schematically shown in FIG. 1, a magnetic induction communications system 100 includes a transmitter 110 and a receiver 120. To allow wireless communication via near-field propagation mechanisms, each device is equipped with a coil (antenna) that implements a transformer (loose coupling). In example arrangements, each of the coils are mounted on a ferrite core, which can provide increased link efficiency. The system 100 operates around a carrier frequency ($F_c$), and uses an FSK modulated signal to transmit data between the transmitter 110 and the receiver 120. As an example, a FSK modulated signal may be used having a bandwidth of about 600 KHz (B) around 13.5 MHz (modulation index of 1.0, modulation rate of 298 Kbps).

The transmitter 110 is shown schematically to include a modulator block 112 to generate the modulated data signal, a mixer 114 to shift the data signal around the carrier frequency, and a coil driver module 116, including the coil, which constitutes an LC circuit tuned at $F_c$. The receiver 120 is also shown in schematic form to have a front end that includes an LC circuit 122, with the coil, that is tuned at the central frequency used for communications. The receiver 120 also includes amplification stages 124 to preamplify the received signal, a down-mixer module 126 to downconvert the signal to baseband, and a demodulator 128 to process the signal.

As indicated by the arrow, the demodulator 128 includes a frequency detection and processing circuit 130 for measuring and adjusting for frequency offset, and for processing the received signals accordingly. This includes a zero-crossing detector (ZCD) 132 that functions to detect occurrences of the signal phase crossing a phase reference, including the direction (clockwise or anticlockwise) of the crossing. The function of the ZCD 132 is described in more detail in discussions that follow. The output of the ZCD 132 feeds into the automatic frequency control loop (AFC) circuit 134, which measures the frequency offset and adjusts the local oscillator of the receiver accordingly. The ouput of the ZCD 132, along with the adjustments made by the AFC 134, are used by the bit determination circuit 136 in final demodulation of the transmitted signal.

As described, in certain embodiments the AFC 134 measures and accumulates time elasped between consecutive forward direction zero-crossings, and measures and accumulates time elasped between consecutive backward direction zero-crossings. The AFC 134 further compares the ratio of the accumulated forward (positive) times to the total forward zero-crossings detected to the ratio of the accumulated backward (negative) times to the total backward zero-crossings detected. Adjustment of the local oscillator of the receiver 120 is made based on the results of comparing these ratios.

Detection of zero-crossings involves the use of pairs of I and Q signals, the generation of which are briefly described in the following discussion. As indicated above, the RF signal captured by the antenna of a receiver is downconverted to baseband, typically after being preamplified. The downconversion is performed by multiplying the RF signal by in-phase and quadrature-phase local oscillator signals, namely $\cos(\omega t)$ which is used to generate the I(t) signal, and $-\sin(\omega t)$ which is used to generate the Q(t) signal. The I(t) and Q(t) signals are filtered and combined together using analog circuits to provide I and Q signal pairs. For illustration, eight I and Q signal pairs are discussed, although it will be recognized that any even number of I and Q signal pairs can be used (e.g., 2, 4, 8, 16, 32). A zero-crossing on these eight phase axis signals corresponds to the crossing of a phase reference. The eight phase axis signals are defined as follows:

$$C0 = Q$$

$$C22 = \cos(22.5){\times}Q - \sin(22.5){\times}I$$

$$C45 = \cos(45){\times}Q - \sin(45){\times}I$$

$$C67 = \sin(22.5){\times}Q - \cos(22.5){\times}I$$

$$C90 = -I$$

$$C112 = -\sin(22.5){\times}Q - \cos(22.5){\times}I$$

$$C135 = -\cos(45){\times}I - \sin(45){\times}Q$$

$$C157 = -\cos(22.5){\times}Q - \sin(22.5){\times}I.$$

These phase axis signals are used to generate separate positive and negative pulse signals, which in turn are used to drive the AFC processing as well as the signal decoding. The AFC processing involves exploiting the occurrences of positive and negative pulses (the sign of the pulse indicating a frequency increase or decrease) to derive a bit value and frequency offset. The ouput of the post-processing is a bit signal with associated clock, and AFC indicators.

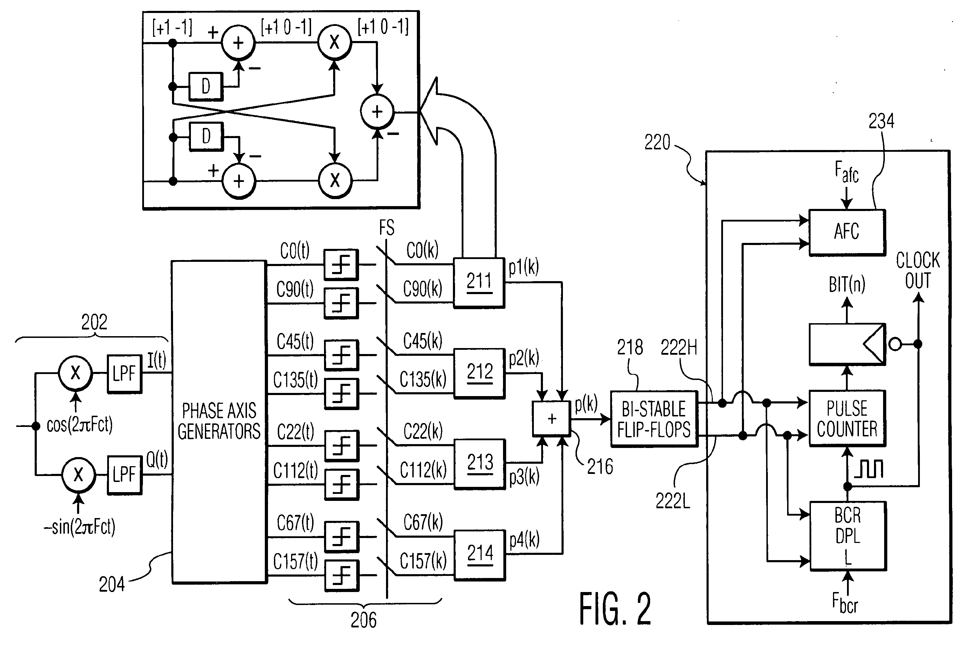

FIG. 2 schematically shows an example implementation of a ZCD and AFC module for processing and postprocessing received FSK modulated signals. The ZCD includes an input portion 202, phase axis generators 204, a clipping portion 206, comparators 211-214, combiner 216, and bi-stable flip-flop module 218. These elements function to generate positive pulses when the signal phase crosses one of the phase references anticlockwise, and negative pulses when the signal phase crosses one of the phase references clockwise. The input portion 202 generates the I(t) and Q(t) signals, which are paired in various combinations by the phase axis generators 204 to generate time-domain signals C0(t), C22(t), C45(t), C67(t), C90(t), C112(t), C135(t), and C157(t). These are clipped and converted to pulse signals by clipping portion 206. The converted signals are compared in various combinations by comparators 211-214, which produce positive and negative pulse signal outputs ($p_i(k)$) for respective pairs of I and Q signal combinations. It should be noted that the combinations indicated in FIG. 2 are merely exemplary, and that any suitable combinations may be used. A detail of comparator 211 is indicated. Each of the pulse signals are combined together by combiner 216 to generate a total pulse signal p(k). It should be noted that any number of the phase axis signal pairs may be used to produce the total pulse signal. For example, in certain embodiments, on the C0 and C90 signals are used, and in other embodiments all the signals are used. The pulse signal p(k) is separated into two signals, one for positive pulses 222H, the other for negative pulses 222L, using bistable flip-flop module 218.

The separated pulse signals 222H and 222L are supplied to post-processing portion 220 for frequency offset measurement and adjustment by AFC module 234, and for bit stream demodulation. In an example embodiment, the AFC module takes as inputs the positive and negative pulses from the processing of C0 and C90 signals (in that case only zero-crossing of the I signal (-C90) and the Q signal (C0) are exploited). It will be appreciated that the pulses from processing any or all comparator combinations of signal pairs (C0, C22, C45, C67, C90, C112, C135, and C157) may be used. It will also be appreciated that the comparators may combine the signal pairs in any other suitable manner.

The AFC module 234 measures the time (for example, measured by the number of clock cycles) between two consecutive pulse occurences having the same polarity. If there is a positive frequency offset (meaning the distance between the carrier frequency and high tone of the FSK signal is lower than the distance between the carrier frequency and the low tone of the FSK signal), the signal is turning slower for the high tone than for the low tone in the I/Q signal plan. This means a longer time elapses (or a higher number of clock cycles) between two zero-crossings for high tones than for low tones. In certain embodiments, the AFC module 234 includes registers (not shown) for accumulating and storing the time between consecutive positive pulses (referred to as the highfreq_dist register), the time between consecutive negative pulses (referred to as the lowfreq_dist register), the number of positive pulses (referred to as the highfreq_meascount register), and the nubmer of negative pulses (referred to as the lowfreq_meascount register). The AFC module 234 may be enabled by the issuance of an enable parameter by software control, which signals the AFC registers to begin accumulating. The AFC registers arc reset once they arc read for frequency offset measurement and adjustment. AFC measurements may be interrupted by resetting the enable parameter (for example due to detecting that a full pack has been received, that a threshold number of measurements have been made, and so forth), or due to an overflow of one of the registers.

Referring again to FIG. 2, the post-processing module 220 functions to convert pulses at zero-crossings into bits. This involves first defining the bit boundaries and then estimating the bit value between the bit boundaries. The ouput of the post-processing unit 220 is a bit signal (bit(n)) with associated clock (clock out). Bit boundaries are determined due to their occurrence between alternating pulses. The determined bit boundaries are used to generate a bit clock. If the bit clock and the local oscillator frequency used to downmix the RF signal are related with each other (derived from same reference clock), then tuning the local oscillator also tunes the bit clock in such a way that bit clock recovery (BCR) involves only adjusting the phase. This can be done by using a counter, which is restarted each time a pulse of the same sign appears and stopped once a pulse of inverted sign occurs. The counter value thus indicates the time delay between alternating pulses. The DPLL (digital phase-locked loop) includes a phase comparator that is triggered on the last pulse (with inverted sign) and stopped on the rising edge of the local clock. Finally, half of the time delay is added (modulo the clock period) to the measured phase difference (with local clock) to derive the phase offset between the interpolated bit edge and the local clock.

The phase offsets are filtered to derive a correction (in phase) to apply to the local clock. Such filtering may include, for example, calculating the phase offset average on the last phase offset, the last two phase offsets, or the last four phase offsets, applying a gain (e.g., 1, 0.5 or 0.25) to the calculated average, and applying a programmable threshold (e.g., up to 31) to the final value. The loop filter parameters are seperately programmable before and after frame synchronization.

Finally the bit values are determined by comparing the number of postive and negative pulses along a bit time. If the number of positive pulses exceeds the number of negative pulses within bit boundaries, the demodulated bit is '1', and otherwise the demodulated bit is '0'.

As described, frequency offset detection involves measuring the distance between the higher tone of the FSK signal and the frequency of the local oscillator of the receiver (running at carrier frequency), as well as the distance between the lower tone of the FSK signal and the frequency of the local oscillator. If the local oscillator is sufficiently aligned with the carrier frequency of the received signal, these distances will be equal, and there will be no frequency offset. Misalignment results in a measurable frequency offset which indicates how much to adjust the local oscillator. To derive a frequency offset, occurrences of both high and low tones in the FSK signal (positive and negative pulses) are used, although the signal need not be balanced, as discussed.

In accordance with certain embodiments, the frequency offset may be measured and characterized in terms of the ratio of the tone distances with carrier, which can be deduced from the measurements accumulated in the AFC registers identified above, and which can be expressed as a frequency ratio in accordance with the following formula:

$$Frequency\ Ratio = \frac{highfreq\_dist}{lowfreq\_dist} \times \frac{lowfreq\_meascount}{highfreq\_meascount},$$

where: *highfreq_dist* is the accumulated time between positive pulses, which represents the accumulated distances between the carrier frequency and the higher FSK tone over several measurements; *lowfreq_dist* is the accumulated time between negative pulses, which represents the accumulated distances between the carrier frequency and the lower FSK tone over several measurements; *highfreq_meascount* is the accumulated number of positive pulses, which represents the number of accumulated measurements of the higher FSK tone; and *lowfreq_meascount* is the accumulated number of negative pulses, which represents the number of accumulated measurements of the lower FSK tone.

Note that in practice, the frequency ratio need not be explicitly computed. Instead, the high and low ratios of accumulated time to accumulated counts can be compared with each other, with the comparison driving the local oscillator tuning (*e.g.*, in a binary mode to step-wise increase/decrease the local oscillator frequency).

The local oscillator is matched to the carrier frequency of the transmitter when the frequency ratio is equal to, or sufficiently close to, 1. In certain embodiments, the frequency ratio is in a range of about 0.8 to 1.2 before any adjustment and signal demodulation is performed. Because the frequency detector operates within a limited range, any signal outside the range will be attenuated by the baseband filters of the radio, which may result in a convergence to an incorrect ratio, and thus an incorrect frequency adjustment if adjustments are made based on frequency ratio measurements outside of the range.

The frequency offset may be also be expressed as a frequency difference, in which the ratio of accumulated time between negative pulses to the number of negative pulses is subtracted from the ratio of accumulated time between positive pulses to the number of positive pulses, according to the formula:

$$Frequency\ Difference = \left(\frac{highfreq\_dist}{highfreq\_meascount}\right) - \left(\frac{lowfreq\_dist}{lowfreq\_meascount}\right).$$

A frequency difference value of 0 indicates frequency alignment. Because the difference is developed between the high ratio and the low ratio, a balanced bit stream is not required.

As mentioned, the AFC module measurements can be triggered by the processor controlling the hardware of the receiver. Measurements are interrupted by the processor based on criteria such as reaching a threshold or receiving a complete data packet, or on an overflow of one of the registers. In certain embodiments, a minimum of 100 measurements are made before calculating a frequency offset (*e.g.*, frequency ratio), and the resulting local oscillator adjustments are made after completing a full measurement cycle. In other embodiments, local oscillator adjustments are made continuously as new measurements are made and folded into the frequency offset calculation. Frequency offset measurements can be susceptible to channel noise, mixer phase noise and distortions caused by the transceiver's (analog) signal processing. As such, to achieve a certain accuracy and to help avoid unwanted oscillation of the AFC, the frequency offset measurements may be processed, for example by averaging.

The operation of the AFC module in accordance with certain embodiments of the present invention is described in the example pseudo-code set forth in Table 1. In the pseudo-code, the pulses are encoded as +1 and -1 (no pulse is encoded as a '0' value) in the "pulses" vector. Each value of "pulses" corresponds to a sample. The parameters tuned are the sampling frequency of the AFC module as well as the phase resolution.

## TABLE 1: Pseudo-code example for AFC module operation

```
pcstarted=0;
ncstarted=0;
pMeasCount=0; // Implementation of "highfreq_meascount"
     (In this example, value limited to 255 – 8 bit register)
nMeasCount=0; // Implementation of "lowfreq_meascount"
     (In this example, value limited to 255 – 8 bit register)
pMeasFreq=0; // Implementation of "highfreq_dist"
nMeasFreq=0; // Implementation of "lowfreq_dist"
bpMeasFreq=0;
bnMeasFreq=0;

for s=1:length(pulses)-1
     if (pulses(s)<0.5)&&(pulses(s)>-0.5)
          if pcstarted==1
               bpMeasFreq=bpMeasFreq+1;
          end;
          if ncstarted==1
               bnMeasFreq=bnMeasFreq+1;
          end;
     elseif (pulses(s)>0.5)
          if(pcstarted==0)
               if ((pMeasCount<255)&&(nMeasCount<255))
                    pcstarted=1;
               end;
          else
               pMeasCount=pMeasCount+1;
               pMeasFreq=pMeasFreq+bpMeasFreq;
               pcstarted=0;
               bpMeasFreq=0;
          end;
          if(ncstarted==1)
               ncstarted=0;
               bnMeasFreq=0;
          end
          elseif (pulses(s)<-0.5)
               if(ncstarted==0)
                    if ((nMeasCount<255)&&(pMeasCount<255))
                         ncstarted=1;
                    end;
               else
                    nMeasCount=nMeasCount+1;
                    nMeasFreq=nMeasFreq+bnMeasFreq;
                    ncstarted=0;
                    bnMeasFreq=0;
               end;
               if(pcstarted==1)
                    pcstarted=0;
                    bpMeasFreq=0;
               end
          end;
     end;

pMeasFreqOff=pMeasFreq/pMeasCount;
nMeasFreqOff=nMeasFreq/nMeasCount;
AFC_indicator= pMeasFreqOff/nMeasFreqOff;
```

As discussed, the frequency offset measurement techniques in accordance with the present invention are applicable to a radio transceiver using FSK modulation, and in which the carrier frequency of the receiver can be tuned. These techniques may be readily incorporated into a zero-crossing detector of the receiver. Systems and methods of the present invention do not rely on a balanced modulating bit stream having an equal number of zeros and ones. As such, the present invention may be implemented independent of the transmitted bit stream. While aspects of the present invention have been illustrated in the context of a zero-IF receiver (*i.e.*, downmixing of RF signal down to baseband), it will be appreciated that embodiments of the present invention are applicable to low-IF receivers.

For low-IF systems, there are no negative occurrences, meaning that the signal is always turning one direction in the I/Q plan. As such, rather than detecting zero-crossings by the direction of the trajectory on the circle in the I/Q plan (*i.e.*, through positive and negative occurrences), the system sorts zero-crossings by the rate of zero-crossing in the same direction. The ratio between the averaged time between two occurrences of one rate, and the averaged time between two occurrences of the other rate will converge to 1 for large intermediate frequency. The ratio is equal to the absolute value of $[(F_{if} + \delta f)/(F_{if} - \delta f)]$ with perfect synchronization, where $F_{if}$ is the Low-IF downmixing frequency and $\delta f$ is the frequency offset of the modulation.

As indicated, the pulses are always of the same sign in low-IF receivers, and as such the time between two phase crossings can be averaged. It should be noted that for low-IF receivers, the measurement may be sensitive to the balance between the number of 0's and 1's transmitted. As indicated in the following equation, the frequency offset measurement may include the deviation of the average frequency compared to the low-IF frequency.

$$Frequency\ Average\ Offset = Avg\left[\frac{freq\_dist}{freq\_meascount}\right] - AvNbCCBetweenZC\ ,$$

where *AvNbCCBetweenZC* is the average number of clock cycles between 2 zero-crossings. This value of the frequency average offset should be zero in case of perfect frequency alignment.

The processing of the times for low-IF receivers can be approached by partitioning the processing into two categories: those higher than a defined threshold, to be accumulated in "highfreq_dist" register, and those lower than the defined threshold, to be accumulated in "lowfreq_dist" register. As an example, the threshold can be the value of *AcNbCCBetweenZC.* The frequency offset measurement can then be expressed as:

$$Frequency\ Average\ Offset = 0.5 \times \left[\frac{highfreq\_dist}{highfreq\_meascount} + \frac{lowfreq\_dist}{lowfreq\_meascount}\right] - AvNbCCBetweenZC\ \cdot$$

In addition to the above, the various processing approaches described herein can be implemented using a variety of devices and methods, including general purpose processors implementing specialized software, digital signal processors, programmable logic arrays, discrete logic components and fully-programmable and semi-programmable circuits such as PLAs (programmable logic arrays). For example, the above algorithms are executed on a microprocessor in connection with certain embodiments, and may be implemented as part of one or more of the devices shown in the figures.

The various embodiments described above and shown in the figures are provided by way of illustration only and should not be construed to limit the invention. Based on the above discussion and illustrations, it will be recognized that the circuits described herein may be manufactured using standard processes and techniques. Those skilled in the art will readily recognize that various modifications and changes may be made to the present invention without departing from the scope of the appended claims.

**Claims**

**1.** For use with an RF receiver (120) to receive FSK-modulated bit streams on a carrier frequency, a method for matching a local oscillator (122) frequency of the RF receiver to the carrier frequency, the method comprising:

detecting (132) zero-crossings for at least one combination of I and Q signal pairs of an FSK-modulated bit stream; determining (218) positive occurrences of each zero-crossing of the at least one combination of I and Q signal pairs in a first direction, and negative occurrences for each zero-crossing of the at least one combination of I and Q signal pairs in a second direction opposite the first direction; over a plurality of positive and negative occurrences, measuring and accumulating (134, 234) total time elapsed between consecutive positive occurrences $H_{dist}$ and total time elapsed between consecutive negative occurrences $L_{dist}$, and accumulating total positive occurrences $H_{count}$ and total negative occurrences $L_{count}$; **characterized by**
comparing (134, 234) a positive occurrence ratio of the accumulated total time elapsed between consecutive positive occurrences to the total positive occurrences $H_{dist}/H_{count}$ to a negative occurrence ratio of the accumulated total time elapsed between consecutive negative occurrences to the total negative *occurrences* $L_{dist}/L_{count}$; and

responsive to the step of comparing the positive occurrence ratio to the negative occurrence ratio, adjusting (134, 234) the local oscillator frequency of the RF receiver.

2. The method of claim 1, wherein the I and Q pairs are selected from the group consisting essentially of C0 = Q, C22 = cos(22.5)×Q - sin(22.5)×I, C45 = cos(45)×Q - sin(45)×I, C67 = sin(22.5)×Q - cos(22.5)×I, C90 = -I, C112 = -sin(22.5)×Q - cos(22.5)×I, C135 = -cos(45)×I - sin(45)×Q, and C157 = -cos(22.5)×Q - sin(22.5)×I.

3. The method of claim 2, wherein the at least one combination of I and Q signal pairs includes signal pairs that are 90° out of phase.

4. The method of claim 1, wherein the step of comparing the positive occurrence ratio to the negative occurrence ratio includes developing a frequency ratio of $(H_{dist}/H_{count}) \times (L_{count}/L_{dist})$.

5. The method of claim 4, wherein the step of adjusting the local oscillator frequency of the RF receiver results in the frequency ratio $(H_{dist}/H_{count}) \times (L_{count}/L_{dist})$ being closer to 1 after the adjusting step than before the adjusting step.

6. The method of claim 4, wherein the step of adjusting the local oscillator frequency of the RF receiver is not performed until the frequency ratio $(H_{dist}/H_{count}) \times (L_{count}/L_{dist})$ has a value from about 0.8 to about 1.2.

7. The method of claim 1, wherein the step of comparing the positive occurrence ratio to the negative occurrence ratio includes developing a frequency difference of $(H_{dist}/H_{count}) - (L_{dist}/L_{count})$

8. The method of claim 7, wherein the step of adjusting the local oscillator frequency of the RF receiver results in the frequency difference $(H_{dist}/H_{count}) - (L_{dist}/L_{count})$ being closer to 0 after the adjusting step than before the adjusting step.

9. The method of claim 1, wherein the step of comparing the positive occurrence ratio to the negative occurrence ratio is performed after detecting a threshold number of zero-crossings.

10. The method of claim 9, wherein the threshold number of zero-crossings is at least 100.

11. The method of claim 1, wherein the step of adjusting the local oscillator frequency of the RF receiver is performed after a specified period of measuring and accumulating total time elapsed between consecutive positive occurrences and between consecutive negative occurrences, and of accumulating total positive occurrences and total negative occurrences.

12. The method of claim 11, wherein the specified period includes receiving a complete packet of the FSK-modulated bit stream.

13. The method of claim 1, wherein the step of adjusting the local oscillator frequency of the RF receiver is performed multiple times during the time when a complete packet of the FSK-modulated bit stream is received.

14. The method of claim 1, wherein the step of comparing the positive occurrence ratio to the negative occurrence ratio is performed after detecting a threshold amount of accumulated total time elapsed between consecutive positive occurrences or between consecutive negative occurrences.

15. The method of claim 1, wherien the FSK-modulated bit stream includes an unbalanced bit count.

16. The method of claim 1, wherein the RF receiver is a zero-IF receiver.

17. For use in receiving an RF signal including FSK-modulated bit streams on a carrier frequency, an RF receiver (120) comprising:

an LC antenna circuit (122) including a local oscillator tuned at a central frequency for receiving the RF signal; and
a demodulator (128) arranged to demodulate the FSK-modulated bit streams of the received RF signal, the demodulator including a zero-crossing detector (132) and a frequency control module (134, 234), the zero-crossing detector including logic circuitry (204, 206, 211-214, 216, 218) arranged to convert I and Q signal representations of the received RF signal into positive pulses representing zero-crossing in a first direction of at least one combination of I and Q signal pairs, and negative pulses representing zero-crossing in a second direction opposite the first direction of the at least one combination of I and Q signal pairs, charcterized by the frequency control module (134, 234) including circuitry to adjust the central frequency of the local oscillator based on comparing a positive pulse ratio of time elapsed between consecutive positive pulses to the number of positive pulses and a negative pulse ratio of time elapsed between consecutive negative pulses to the number of negative pulses.

**18.** The RF receiver of claim 17, further including registers for accumulating and storing the time elapsed between consecutive positive pulses, the time elapsed between consecutive negative pulses, the number of positive pulses and the number of negative pulses.

**19.** The RF receiver of claim 17, wherein the RF receiver is a zero-IF receiver.

**20.** For use with an RF receiver (120) to receive FSK-modulated bit streams on a carrier frequency, a method for matching a local oscillator (122) frequency of the RF receiver to the carrier frequency, the method comprising:

detecting (132) zero-crossings for at least one combination of I and Q signal pairs of an FSK-modulated bit stream;
determining (218) high occurrences of each zero-crossing of the at least one combination of I and Q signal pairs having a first crossing vector, and low occurrences for each zero-crossing of the at least one combination of I and Q signal pairs having a second crossing vector different from the first crossing vector;
over a plurality of high and low occurrences, measuring and accumulating (134, 234) total time elapsed between consecutive high *occurrences* $H_{dist}$ and total time elapsed between consecutive low occurrences $L_{dist}$, and accumulating total high occurrences $H_{count}$ and total low occurrences $L_{count}$; **characterized by**
developing (134, 234) a high occurrence ratio of the accumulated total time elapsed between consecutive high occurrences to the total high occurrences $H_{dist}/H_{count}$ and a low occurrence ratio of the accumulated total time elapsed between consecutive low occurrences to the total low occurrences $L_{dist}/L_{count}$; and
adjusting (134, 234) the local oscillator frequency of the RF receiver based on the developed high occurrence ratio and low occurrence ratio.

**21.** The method of claim 20, further comprising determining a frequency offset value using an average of the high occurrence ratio and low occurrence ratio, and wherein the frequency offset value is used to adjust the local oscillator frequency.

**22.** The method of claim 20, wherein the RF receiver is a low-IF receiver.

**23.** The method of claim 20, wherein the RF receiver is a zero-IF receiver.

**24.** The method of claim 20, wherein the first and second crossing vectors include crossing rate.

**25.** The method of claim 20, wherein the first and second crossing vectors include crossing direction.

**Patentansprüche**

**1.** Zum Verwenden mit einem RF Empfänger (120), um FSK-modulierte Bitreihen auf einer Trägerfrequenz zu empfangen, ein Verfahren zum Angleichen einer lokalen Oszillator (122) Frequenz von dem RF Empfänger an die Trägerfrequenz, wobei das Verfahren aufweist:

Detektieren (132) von Nulldurchgängen für zumindest eine Kombination von I und Q Signalpaaren von einer FSK-modulierten Bitreihe;
Bestimmen (218) von Positiv Ereignissen von jedem Nulldurchgang von der zumindest einen Kombination von I und Q Signalpaaren in einer ersten Richtung und Negativ Ereignissen für jeden Nulldurchgang von der zumindest einen Kombination von I und Q Signalpaaren in einer der ersten Richtung entgegengesetzten zweiten Richtung;
über eine Mehrzahl von Positiv und Negativ Ereignissen, Messen und Akkumulieren (134, 234) der gesamten abgelaufenen Zeit zwischen aufeinanderfolgenden Positiv Ereignissen $H_{dist}$ und der gesamten abgelaufenen Zeit zwischen aufeinanderfolgenden Negativ Ereignissen $L_{dist}$ und Akkumulieren von gesamten Positiv Ereignissen $H_{count}$ und gesamten Negativ Ereignissen $L_{count}$;

**dadurch gekennzeichnet, dass**

Vergleichen (134, 234) eines Positiv Ereignis Verhältnisses von der akkumulierten gesamten abgelaufenen Zeit zwischen aufeinanderfolgenden Positiv Ereignissen und den gesamten Positiv Ereignissen $H_{dist}/H_{count}$ mit einem Negativ Ereignis Verhältnis von der akkumulierten gesamten abgelaufenen Zeit zwischen aufeinanderfolgenden Negativ Ereignissen und den gesamten Negativ Ereignissen $L_{dist}/L_{count}$; und

Reagierend auf den Schritt des Vergleichens des Positiv Ereignis Verhältnisses mit dem Negativ Ereignis Verhältnis, ein Anpassen (134, 234) der lokalen Oszillatorfrequenz von dem RF Empfänger.

2. Verfahren gemäß Anspruch 1, wobei die I und Q Paare ausgewählt sind von der Gruppe, welche hauptsächlich aus $C0=Q$, $C22 = \cos(22{,}5) \times Q - \sin(22{,}5) \times I$, $C45 = \cos(45) \times Q - \sin(45) \times I$, $C67 = \sin(22{,}5) \times Q - \cos(22{,}5) \times I$, $C90 = -1$, $C112 = -\sin(22{,}5) \times Q - \cos(22{,}5) \times I$, $C135 = -\cos(45) \times I - \sin(45) \times Q$ und $C157 = -\cos(22{,}5) \times Q - \sin(22{,}5) \times I$ bestehen.

3. Verfahren gemäß Anspruch 2, wobei die zumindest eine Kombination von I und Q Signalpaaren Signalpaare, welche 90° außer Phase sind, beinhaltet.

4. Verfahren gemäß Anspruch 1, wobei der Schritt des Vergleichens des Positiv Ereignis Verhältnisses mit dem Negativ Ereignis Verhältnis ein Entwickeln eines Frequenzverhältnisses von $(H_{dist}/H_{count}) \times (L_{count}/L_{dist})$ beinhaltet.

5. Verfahren gemäß Anspruch 4, wobei der Schritt des Anpassens der lokalen Oszillatorfrequenz des RF Empfängers in das Frequenzverhältnis $(H_{dist}/H_{count}) \times (L_{count}/L_{dist})$ resultiert, welches nach dem Anpassungsschritt näher an 1 ist als vor dem Anpassungsschritt.

6. Verfahren gemäß Anspruch 4, wobei der Schritt des Anpassens der lokalen Oszillatorfrequenz des RF Empfängers nicht ausgeführt wird bis das Frequenzverhältnis $(H_{dist}/H_{count}) \times (L_{count}/L_{dist})$ einen Wert von ungefähr 0,8 bis ungefähr 1,2 hat.

7. Verfahren gemäß Anspruch 1, wobei der Schritt des Vergleichens des Positiv Ereignis Verhältnisses mit dem Negativ Ereignis Verhältnis ein Entwickeln einer Frequenzdifferenz von $(H_{dist}/H_{count}) - (L_{dist}/L_{count})$ beinhaltet.

8. Verfahren gemäß Anspruch 7, wobei der Schritt des Anpassens der lokalen Oszillatorfrequenz des RF Empfängers in der Frequenzdifferenz $(H_{dist}/H_{count}) - (L_{dist}/L_{count})$ resultiert, welche nach dem Anpassungsschritt näher an 0 ist als vor dem Anpassungsschritt ist.

9. Verfahren gemäß Anspruch 1, wobei der Schritt des Vergleichens des Positiv Ereignis Verhältnisses mit dem Negativ Ereignis Verhältnis nach dem Detektieren einer Schwellwert-Anzahl von Nulldurchgängen ausgeführt wird.

10. Verfahren gemäß Anspruch 9, wobei die Schwellwert-Anzahl der Nulldurchgänge zumindest 100 ist.

11. Verfahren gemäß Anspruch 1, wobei der Schritt des Anpassens der lokalen Oszillatorfrequenz von dem RF Empfänger ausgeführt wird nach einem spezifizierten Zeitraum zum Messen und Akkumulieren der gesamten abgelaufenen Zeit zwischen aufeinanderfolgenden Positiv Ereignissen und zwischen aufeinanderfolgenden Negativ Ereignissen und Akkumulieren von gesamten Positiv Ereignissen und gesamten Negativ Ereignissen.

12. Verfahren gemäß Anspruch 11, wobei der vorgesehene Zeitraum ein Empfangen eines vollständigen Paketes der FSK-modulierten Bitreihe beinhaltet.

13. Verfahren gemäß Anspruch 1, wobei der Schritt des Anpassens der lokalen Oszillatorfrequenz des RF Empfängers mehrfach ausgeführt wird während der Zeit, wenn ein vollständiges Paket der FSK-modulierten Bitreihe empfangen wird.

14. Verfahren gemäß Anspruch 1, wobei der Schritt des Vergleichens des Positiv Ereignis Verhältnisses mit dem Negativ Ereignis Verhältnis ausgeführt wird nach dem Detektieren eines Betrags einer Schwellwert-Menge von der akkumulierten gesamten abgelaufenen Zeit zwischen aufeinanderfolgenden Positiv Ereignissen oder zwischen aufeinanderfolgenden Negativ Ereignissen.

**15.** Verfahren gemäß Anspruch 1, wobei die FSK-modulierte Bitreihe einen unbalancierten Bitzähler beinhaltet.

**16.** Verfahren gemäß Anspruch 1, wobei der RF Empfänger ein Null-IF Empfänger ist.

**17.** Zum Verwenden beim Empfangen eines RF Signals, welches FSK-modulierte Bitreihen auf einer Trägerfrequenz beinhaltet, ein RF Empfänger (120) aufweisend:

einen LC Antennenempfänger (120), welcher einen lokalen auf eine zentrale Frequenz zum Empfangen des RF Signals abgestimmten Oszillator beinhaltet; und

einen Demodulator (128), welcher eingerichtet ist, um die FSK-modulierten Bitreihen des empfangenen RF Signals zu demodulieren, wobei der Demodulator einen Nulldurchgangsdetektor (132) und ein Frequenzsteuermodul (143, 234) beinhaltet,

wobei der Nulldurchgangsdetektor einen logischen Schaltkreis (204, 206, 211-214, 216, 218) beinhaltet, welcher eingerichtet ist, I und Q Signaldarstellungen des empfangenen RF Signals umzuwandeln in positive Pulse, welche Nulldurchgänge in einer ersten Richtung von zumindest einer Kombination von I und Q Signalpaaren repräsentieren, und negative Pulse, welche Nulldurchgänge in einer zweiten Richtung, welche der ersten Richtung entgegengesetzt ist, von der zumindest einen Kombination von I und Q Signalpaaren repräsentieren, dadurch charakterisiert, dass

das Frequenzsteuermodul (134, 234) beinhaltet einen Schaltkreis zum Anpassen der zentralen Frequenz von dem lokalen Oszillator basierend auf dem Vergleichen eines Positiv Puls Verhältnisses von der abgelaufenen Zeit zwischen aufeinanderfolgenden Positiv Pulsen zu der Anzahl von Positiv Pulsen und eines Negativ Puls Verhältnisses von der abgelaufenen Zeit zwischen aufeinanderfolgenden Negativ Pulsen zu der Anzahl von Negativ Pulsen.

**18.** RF Empfänger gemäß Anspruch 17, ferner beinhaltend Register für das Akkumulieren und Speichern der abgelaufenen Zeit zwischen aufeinanderfolgenden Positiv Pulsen, der abgelaufen Zeit zwischen aufeinanderfolgenden Negativ Pulsen, der Anzahl der Positiv Pulse und der Anzahl der Negativ Pulse.

**19.** RF Empfänger gemäß Anspruch 17, wobei der RF Empfänger ein Null-IF Empfänger ist.

**20.** Zum Verwenden mit einem RF Empfänger (120), um FSK-modulierte Bitreihen auf einer Trägerfrequenz zu empfangen, ein Verfahren zum Angleichen einer lokalen Oszillator (122) Frequenz des RF Empfängers an die Trägerfrequenz, wobei das Verfahren aufweist:

Detektieren (132) von Nulldurchgängen für zumindest eine Kombination von I und Q Signalpaaren von einer FSK-modulierten Bitreihe;

Bestimmen (218) von Hoch Ereignissen von jedem Nulldurchgang von der zumindest einen Kombination von I und Q Signalpaaren, welche einen ersten Durchgangsvektor haben, und Niedrig Ereignissen von jedem Nulldurchgang von der zumindest einen Kombination von I und Q Signalpaaren, welche einen zweiten von dem ersten Durchgangsvektor unterschiedlichen Durchgangsvektor haben;

über eine Mehrzahl von Hoch und Niedrig Ereignissen, Messen und Akkumulieren (134, 234) der gesamten abgelaufenen Zeit zwischen aufeinanderfolgenden Hoch Ereignissen $H_{dist}$ und der gesamten abgelaufenen Zeit zwischen aufeinanderfolgenden Niedrig Ereignissen $L_{dist}$ und Akkumulieren der gesamten Hoch Ereignisse $H_{count}$ und der gesamten Niedrig Ereignisse $L_{count}$;

dadurch charakterisiert, dass

Entwickeln (134, 234) eines Hoch Ereignis Verhältnisses von der akkumulierten gesamten abgelaufenen Zeit zwischen aufeinanderfolgenden Hoch Ereignissen und den gesamten Hoch Ereignissen $H_{dist}/H_{count}$ und eines Niedrig Ereignis Verhältnisses von der akkumulierten gesamten abgelaufenen Zeit zwischen aufeinanderfolgenden Niedrig Ereignissen und den gesamten Niedrig Ereignissen $L_{dist}/L_{count}$; und

Anpassen (134, 234) der lokalen Oszillatorfrequenz von dem RF Empfänger basierend auf den entwickelten Hoch Ereignis Verhältnis und Niedrig Ereignis Verhältnis.

**21.** Verfahren gemäß Anspruch 20, ferner aufweisend Bestimmen eines Frequenzversatzwertes, unter Verwendung eines Mittelwerts von dem Hoch Ereignis Verhältnis und Niedrig Ereignis Verhältnis, und wobei der Frequenzversatzwert verwendet wird, um die lokale Oszillatorfrequenz anzupassen.

**22.** Verfahren gemäß Anspruch 20, wobei der RF Empfänger ein Niedrig-IF Empfänger ist.

**23.** Verfahren gemäß Anspruch 20, wobei der RF Empfänger ein Null-IF Empfänger ist.

**24.** Verfahren gemäß Anspruch 20, wobei der erste und zweite Durchgangsvektor eine Durchgangsrate beinhalten.

**25.** Verfahren gemäß Anspruch 20, wobei der erste und zweite Durchgangsvektor eine Durchgangsrichtung beinhalten.

**Revendications**

**1.** En vue d'être utilisé avec un récepteur RF (120) pour la réception de flux de données binaires en modulation FSK sur une fréquence porteuse, procédé d'ajustement de la fréquence d'un oscillateur local (122) du récepteur RF à la fréquence de la porteuse, le procédé comprenant :

la détection (132) des croisements du zéro pour au moins une combinaison de paires de signaux I et Q d'un flux de données binaires en modulation FSK ;
la détermination (218) des occurrences positives de chaque croisement du zéro pour au moins une combinaison des paires de signaux I et Q dans une première direction, et des occurrences négatives de chaque croisement du zéro pour au moins une combinaison des paires de signaux I et Q dans une deuxième direction opposée à la première direction ;
sur une pluralité d'occurrences positives et négatives, mesure et accumulation (134, 234) du temps total écoulé entre des occurrences positives successives $H_{dist}$ et du temps total écoulé entre des occurrences négatives successives $L_{dist}$, et accumulation du total des occurrences positives $H_{count}$ et du total des occurrences négatives $L_{count}$ ; **caractérisé par**
la comparaison (134, 234) d'un rapport des occurrences positives entre la durée totale accumulée entre des occurrences positives successives et le nombre total d'occurrences positives $H_{dist}/H_{count}$ et un rapport des occurrences négatives entre la durée totale accumulée écoulée entre des occurrences négatives successives et le nombre total d'occurrences négatives $L_{dist}/L_{count}$ ; et
en réponse à l'étape de comparaison du rapport des occurrences positives au rapport des occurrences négatives, ajustement (134, 234) de la fréquence de l'oscillateur local du récepteur RF.

**2.** Procédé selon la revendication 1, dans lequel les paires I et Q sont sélectionnées à partir du groupe composé essentiellement de C0 = Q, C22 = cos(22.5)xQ-sin(22.5)xI, C45 = cos(45)xQ-sin(45)xI, C67 = sin(22.5)xQ-cos(22.5)xI, C90 = -I, C112 = -sin(22.5)xQ-cos(22.5)xI, C135 = -cos(45)x1 - sin(45)xQ, et C 157 = -cos(22.5)xQ-sin(22.5)xI.

**3.** Procédé selon la revendication 2, dans lequel au moins une combinaison de paires de signaux I et Q comprend des paires de signaux qui sont déphasés de 90°.

**4.** Procédé selon la revendication 1, dans lequel l'étape de comparaison du rapport des occurrences positives au rapport des occurrences négatives comporte le développement d'un rapport de fréquence $(H_{dist}/H_{count})$ x $(Lc_{ount}/L_{dist})$.

**5.** Procédé selon la revendication 4, dans lequel l'étape d'ajustement de la fréquence de l'oscillateur local du récepteur RF conduit à ce que le rapport de fréquence $(H_{dist}/H_{count})$ x $(L_{count}/L_{dist})$ soit plus proche de 1 après l'étape d'ajustement qu'avant l'étape d'ajustement.

**6.** Procédé selon la revendication 4, dans lequel l'étape d'ajustement de la fréquence de l'oscillateur local du récepteur RF n'est pas réalisée tant que le rapport de fréquence $(H_{dist}/H_{count})$ x $(L_{count}/L_{dist})$ n'a pas une valeur allant d'environ 0,8 à environ 1,2.

**7.** Procédé selon la revendication 1, dans lequel l'étape de comparaison du rapport des occurrences positives au rapport des occurrences négatives comporte le développement d'une différence de fréquence $(H_{dist}/H_{count})$ - $(L_{dist}/L_{count})$.

**8.** Procédé selon la revendication 7, dans lequel l'étape d'ajustement de la fréquence de l'oscillateur local du récepteur RF conduit à ce que la différence de fréquence $(H_{dist}/H_{count})$ - $(L_{dist}/L_{count})$ soit plus proche de 0 après l'étape d'ajustement qu'avant l'étape d'ajustement.

**9.** Procédé selon la revendication 1, dans lequel l'étape de comparaison du rapport des occurrences positives au rapport des occurrences négatives est réalisée après détection d'un nombre seuil de croisements du zéro.

10. Procédé selon la revendication 9, dans lequel le nombre seuil de croisements du zéro est au moins égal à 100.

11. Procédé selon la revendication 1, dans lequel l'étape d'ajustement de la fréquence de l'oscillateur local du récepteur RF est réalisée après une période de mesure spécifiée et l'accumulation du temps total écoulé entre des occurrences positives successives et entre des occurrences négatives successives, et l'accumulation du total des occurrences positives et du total des occurrences négatives.

12. Procédé selon la revendication 11, dans lequel la période spécifiée comprend la réception d'un paquet complet du flux de données binaires en modulation FSK.

13. Procédé selon la revendication 1, dans lequel l'étape d'ajustement de la fréquence de l'oscillateur local du récepteur RF est réalisée de multiples fois au cours de la durée pendant laquelle est reçu un paquet complet du flux de données binaires en modulation FSK.

14. Procédé selon la revendication 1, dans lequel l'étape de comparaison du rapport des occurrences positives au rapport des occurrences négatives est réalisée après détection d'un nombre seuil de temps total accumulé écoulé entre des occurrences positives successives ou entre des occurrences négatives successives.

15. Procédé selon la revendication 1, dans lequel le flux de données binaires en modulation FSK contient un nombre de bits non équilibré.

16. Procédé selon la revendication 1, dans lequel le récepteur RF est un récepteur à fréquence intermédiaire nulle.

17. Récepteur RF (120), en vue d'être utilisé pour la réception d'un signal RF comprenant des flux de données binaires en modulation FSK sur une fréquence porteuse, comprenant :

un circuit d'antenne LC (122) comprenant un oscillateur local accordé sur une fréquence centrale pour recevoir le signal RF ; et
un démodulateur (128) agencé de manière à démoduler les flux de données binaires en modulation FSK du signal RF reçu, le démodulateur comprenant un détecteur de croisement du zéro (132) et un module de contrôle de fréquence (134, 234),
le détecteur de croisement du zéro comprenant une circuiterie logique (204, 206, 211-214, 216, 218) agencée de manière à convertir des représentations des signaux I et Q du signal RF reçu en impulsions positives représentant des croisements du zéro dans une première direction d'au moins une combinaison des paires de signaux I et Q, et en impulsions négatives représentant des croisements du zéro dans une deuxième direction opposée à la première direction d'au moins une combinaison des paires de signaux I et Q, **caractérisé par le fait que**
le module de contrôle de fréquence (134, 234) contient une circuiterie pour ajuster la fréquence centrale de l'oscillateur local en fonction d'une comparaison du rapport des impulsions positives du temps écoulé entre des impulsions positives successives sur le nombre d'impulsions positives et du rapport des impulsions négatives du temps écoulé entre des impulsions négatives successives sur le nombre d'impulsions négatives.

18. Récepteur RF selon la revendication 17, comprenant en outre des registres pour accumuler et stocker la durée écoulée entre des impulsions positives successives, la durée écoulée entre des impulsions négatives successives, le nombre d'impulsions positives et le nombre d'impulsions négatives.

19. Récepteur RF selon la revendication 17, dans lequel le récepteur RF est un récepteur à fréquence intermédiaire nulle.

20. En vue d'être utilisé dans un récepteur RF (120) pour la réception d'un signal RF comprenant des flux de données binaires en modulation FSK sur une fréquence porteuse, procédé d'ajustement de la fréquence d'un oscillateur local (122) du récepteur RF à la fréquence de la porteuse, le procédé comprenant :

la détection (132) des croisements du zéro pour au moins une combinaison des paires de signaux I et Q du flux de données binaires en modulation FSK ;
la détermination (218) des occurrences hautes de chaque croisement du zéro pour au moins une combinaison des paires de signaux I et Q ayant un premier vecteur de croisement, et des occurrences basses de chaque croisement du zéro pour au moins une combinaison des paires de signaux I et Q ayant un deuxième vecteur de croisement différent du premier vecteur de croisement ;

sur une pluralité d'occurrences hautes et basses, mesure et accumulation (134, 234) du temps total écoulé entre des occurrences hautes successives $H_{dist}$ et du temps total écoulé entre des occurrences basses successives $L_{dist}$, et accumulation du total des occurrences hautes $H_{count}$ et du total des occurrences basses $L_{count}$ ;

**caractérisé par**

le développement (134, 234) d'un rapport des occurrences hautes entre la durée totale accumulée entre des occurrences hautes successives et le nombre total d'occurrences hautes $H_{dist}/H_{count}$ et d'un rapport des occurrences basses entre la durée totale accumulée écoulée entre des occurrences basses successives et le nombre total d'occurrences basses $L_{dist}/L_{count}$ ; et

l'ajustement (134, 234) de la fréquence de l'oscillateur local du récepteur RF en fonction du rapport des occurrences hautes et du rapport des occurrences basses développés.

21. Procédé selon la revendication 20, comprenant en outre la détermination d'une valeur de décalage de fréquence en utilisant une moyenne du rapport des occurrences hautes et du rapport des occurrences basses, et dans lequel la valeur du décalage de fréquence sert à ajuster la fréquence de l'oscillateur local.

22. Procédé selon la revendication 20, dans lequel le récepteur RF est un récepteur à fréquence intermédiaire basse.

23. Procédé selon la revendication 20, dans lequel le récepteur RF est un récepteur à fréquence intermédiaire nulle.

24. Procédé selon la revendication 20, dans lequel les premiers et deuxièmes vecteurs de croisement comprennent les taux de croisement.

25. Procédé selon la revendication 20, dans lequel les premiers et deuxièmes vecteurs de croisement comprennent la direction de croisement.

FIG. 1

EP 2 359 556 B1

FIG. 2

**EP 2 359 556 B1**

## REFERENCES CITED IN THE DESCRIPTION

### Patent documents cited in the description

- US 5633895 A
- US 5469112 A
- EP 1631030 A
- US 6553083 B
- US 2007011219 A